# EUROPEAN PATENT SPECIFICATION

(11) **EP 3 755 530 B1**
(45) Date of publication and mention of the grant of the patent: **26.01.2022**
(21) Application number: 19701882.3
(22) Date of filing: 04.02.2019
(51) Int. Cl.: B32B 1/08, B32B 3/12, B32B 3/28, B32B 7/08, B32B 7/12, B32B 15/04, B32B 15/18, B61B 13/10, B32B 5/18, B32B 5/20, B32B 3/04, B32B 3/18

(54) **EVACUATED TUBE TRANSPORT SYSTEM TUBE**
ROHRSEGMENT UND ROHR FÜR EVAKUIERTES ROHRTRANSPORTSYSTEM
SEGMENT DE TUBE POUR SYSTÈME DE TRANSPORT DE TUBE SOUS VIDE

(30) Priority: 24.02.2018 EP 18158491
(43) Date of publication of application: 30.12.2020
(73) Proprietor: Tata Steel Nederland Technology B.V., 1951 JZ Velsen-Noord (NL)
(72) Inventor: DAVIES, Colin, Michael, 1970 CA Ijmuiden (NL); DE VRIES, Paul, Alexander, 1970 CA IJmuiden (NL)
(74) Representative: Group Intellectual Property Services
(86) International application number: PCT/EP2019/052577
(87) International publication number: WO 2019/162068

(56) References cited:
- US-A- 5 950 543

## Description

This invention relates to a method for producing an evacuated tube transport system tube.

A hyperloop is a proposed mode of passenger and/or freight transportation, first used to describe an open-source vactrain design released by a joint team from Tesla and SpaceX. Drawing heavily from Robert Goddard's vactrain, a hyperloop comprises a sealed tube or system of tubes through which a pod may travel free of air resistance or friction conveying people or objects at high speed and acceleration. Elon Musk's version of the concept, first publicly mentioned in 2012, incorporates reduced-pressure tubes in which pressurized capsules ride on air bearings driven by linear induction motors and air compressors. The tubes would run above ground on columns or below ground in tunnels to avoid the dangers of grade crossings. The concept would allow travel which is considerably faster than current rail or air travel times. An ideal hyperloop system will be more energy-efficient, quiet, and autonomous than existing modes of mass transit.

Developments in high-speed rail have historically been impeded by the difficulties in managing friction and air resistance, both of which become substantial when vehicles approach high speeds. The vactrain concept theoretically eliminates these obstacles by employing magnetically levitating trains in evacuated (airless) or partly evacuated tubes, allowing for very high speeds. The principle of magnetic levitation is disclosed in US1020942. However, the high cost of magnetic levitation and the difficulty of maintaining a vacuum over large distances has prevented this type of system from ever being built. The Hyperloop resembles a vactrain system but operates at approximately one millibar (100 Pa) of pressure and can therefore be described as an evacuated tube transport (ETT) system as disclosed in general terms in US5950543.

An Evacuated Tube Transport system (ETT) solves many problems associated with classic transport by moving all obstacles from the path of travel and not allowing their return. Once the path is evacuated and free from obstacles, travel can take place unimpeded. The object traveling (in this case a capsule) is in a tube so it stays on the intended path and no obstacles can get on the path. If subsequent capsules undergo identical acceleration and deceleration, many capsules can travel the same direction in the tube at once with complete safety. Acceleration and deceleration are planned to prevent the capsule from becoming an obstacle to subsequent capsules. The reliability of the capsules is very high due to minimal or no reliance on moving parts. Most of the energy required to accelerate is recovered during deceleration.

One of the important elements of an ETT-system is the tube. These tubes require a large diameter for allowing the pods containing the freight or passengers to pass through. The main requirement of the tube is that it must be evacuated. The pressure in the tube is about 100 Pa, so it must be able to withstand the pressure from the surrounding atmosphere. The atmospheric pressure is about 101 kPa, so about 1000 times the pressure in the tube. As the tubes above ground would often be supported (e.g. by columns) the tube must also be able to span the gap between two supports without bending or buckling. According to the full proposal of the Hyperloop Alpha project a tube wall thickness between 20 to 23 mm is necessary to provide sufficient strength for the load cases considered such as pressure differential, bending and buckling between pillars, loading due to the capsule weight and acceleration, as well as seismic considerations for a passenger tube. For a passenger plus vehicle tube the tube wall thickness for the larger tube would be between 23 to 25 mm. These calculations are based on a tube having an internal diameter of 3.30 m. However, calculations have also shown that the economics of the ETT-system can be much improved by increasing the pod size travelling through the tube. These increased pod sizes require an internal diameter in the order of 3.50 to 5.00 meter. If these diameters of tube are produced from steel, then this requires a thickness in the order of 30 mm. No hot strip mill is able to supply material of this thickness, and therefore these tubes would have to be produced from plate. With the proposed wide spread use of the ETT system and steel as the preferred material for the tube, this would require approx. 3000 ton/km × 20000 km = 60 Mton. Currently the total production of plate in EU28 is about 10 Mton/year. Apart from this capacity problem it is clear that producing tubes from plate requires an enormous amount of cumbersome handling and shaping on-site and welding of the plate, as well as that the tubes become very heavy. A 5 m diameter tube of 30 mm thick steel weighs 3700 kg/m, meaning that segments of 10 m weigh 37 tonnes. The payload of a Mi-26 helicopter is about 22 tonnes. Transport via the road is impractical in view of viaducts or other restrictions.

Buckling refers to the loss of stability of a structure and in its simplest form, is independent of the material strength where it is assumed that this loss of stability occurs within the elastic range of the material. Slender or thin-walled structures under compressive loading are susceptible to buckling.

It is the object of the invention to provide an ETT-system tube that is lighter than a conventionally produced tube, which is not susceptible to buckling.

It is a further object of the invention to provide an ETT-system tube that can be produced on-site.

It is a further object of the invention to provide a tube for an ETT-system that can be transported over the road easily.

One or more of these object is reached with a tube according to claim 1. Preferable embodiments are provided in the dependent claims. The evacuated tube transport system tube is, in use, near vacuum. In the context of this invention wherein the pressure outside the tube is the atmospheric pressure of about 101 kPa (1 bar), near vacuum means that the pressure inside the tube is less than 10 kPa (≈0.1 bar), preferably less than 1 kPa (≈0.01 bar or 10 mbar), even more preferably less than 500 Pa (≈5 mbar) or even 200 Pa (≈2 mbar), or even about 100 Pa (≈1 mbar).

A couple of definitions: A **tube** for an ETT is divided into **tube segments** of a manageable size. For example, a tube segment of between 10 and 30 m can be transported through air, train or on a lorry. The internal diameter of the tube segment is between about 3 and 5 m. **Sub-segments** are parts of a tube segment that can be transported more easily because of lower weight, or more convenient dimensions. These sub-segments are joined to other segments to form tube segments, for instance at or near the hyperloop construction site. **Short tube sub-segments** (STS) are closed rings that can be joined together to form a tube segment. For example, 20 short tube subsegments of 1.5 m long form a 30 meter long tube segment. The sub-segment may also be a **long tube-subsegment** (LTS) or also referred to as a **prefabricated wall part.** A tube segment (360°) can be produced by joining 3 120° long tube segments or 4 90° (5 × 72°, 6 × 60 °, etc.) long tube segments together. The length of these LTSs is equal to the length of the tube segment. These LTSs can be transported on a train, ship, lorry, through the already built tube or by air transport (helicopter).

A tube segment for constructing an evacuated tube transport system is proposed wherein the tube segment consists of a double-walled metal tube comprising an exterior metal tube (2) having a wall thickness d0, and an interior metal tube (3) having a wall thickness d1, wherein the space between the exterior metal tube and the interior metal is filled with a stiffening compound, and wherein the stiffening compound bonds to and makes intimate contact with the interior surface of the exterior tube (2) and with the exterior surface of the interior tube (3).

The tube segment according to the invention is suitable for constructing an evacuated tube transport system. However, the specific properties of the tube segment, and in particular its ability to perform under conditions wherein the pressure exerted on it from outside the tube produced from these tube segments is significantly higher than the pressure in the tube make it also suitable for the application of tubes operating under similar pressure conditions. Examples of these applications are underground or underwater tunnels for traffic such as bicycle tunnels, car tunnels, train tunnels, maintenance tunnels or shafts, tubes in hydro-electric power stations, gas storage systems in which underpressure occurs or may occur, etc.

The stiffening compound ensures not only a stiffening of the tube-in-tube, but it is also a structural element in that it binds the interior tube and the exterior tube together. The annular space is preferably completely filled with the stiffening compound, because any irregularities in the filling of the annular space may cause weak spots for buckling and/or mechanical failure. It is deemed important that during production of the tube segment care has to be taken that the annular space has the thickness everywhere along the circumference of the tube. Spacers may be used to ensure that this is the case. The bonding is also needed because a loose stiffening compound will not contribute enough to the stiffness and structural integrity. By using the stiffening compound as a structural component, rather than just a filler material, the metal of the tubes can be made much thinner, because the stiffening compound is a load bearing material if bonded to the metal of the tubes. The stiffening compound performs at least three distinct structural roles. Firstly, it provides the means by which the double-skinned tube sustains shearing actions applied transversely to the longitudinal axis of the tube. Secondly, by communicating shearing forces within the tube walls it ensures composite action between the two skins and so contributes to resistance against overall buckling of the double-skinned tube. Thirdly, by resisting relative displacement of the skins in a radial direction it contributes resistance against the local buckling modes known as face wrinkling (in which ripples, with a wavelength of a similar order of magnitude to the core thickness, develop in the compressed skins).

Note that within the context of this description is tube is defined as a long hollow cylinder wherein the cross-section can be circular, ellipsoid, triangular, square, rectangular, pentagonal, hexagonal, etc. The shape of the cross section is not particularly limiting, provided the cross section is sufficiently large to serve as a tube for an ETT, i.e. the pods must be able to traveling through the tube, and provided the structural integrity of the structure is safeguarded. If these two main conditions are fulfilled, then the choice of the designer is governed by aspects of production (on-site, off-site), installation (on-site, off-site), transport (lot of small elements or fewer larger elements) and even aesthetics.

The stiffening compound may be a foam core. Homogeneous core materials, e.g. polyurethane (PU) foams, are widely used in low cost applications (e.g. in building and automotive industry). Recently, polypropylene foams (EPP) have become a better recyclable alternative to PU foams. Honeycomb core materials can offer weight and cost savings thanks to their excellent performance per weight. Unlike corrugated core types, which cell openings in the in-plane direction, honeycomb core types have vertical cell walls and only openings in the out-of-plane direction and provide a bi-directional support for the skins.

In an embodiment the stiffening compound is a honeycomb material, preferably a rigid polymer honeycomb material. Examples of this material is the ThermHex honeycomb material by EconCore and used e.g. in Tata Steel's Coretinium^{®}. The honeycomb material is bonded to the interior surface of the exterior tube and the exterior surface of the interior tube and makes intimate contact therewith.

In an embodiment the stiffening compound is a structural foam, preferably a high density structural foam, more preferably a polyurethane foam, even more preferably a high density polyurethane foam. Other examples are PVC, PET, PES and syntactic foams.

In an embodiment the stiffening compound is formed in situ in the annular space. By bringing the precursor materials in the annular space and allowing the precursor material to react, form and cure the foam the bond between the metal tubes can be formed and the intimate contact between the foam and the metal of the metal tubes ensures that the foam is a structural component, and not just a filler. Preferably the stiffening compound is an ambient cured foam or a heat cured foam. Preferably the stiffening compound is an expandable foam.

In an embodiment a tube segment for constructing an evacuated tube transport system is provided wherein the tube segment consists of an exterior metal tube with an interior radius R0 and a wall thickness d0, and an interior metal tube with an exterior radius R1, and a wall thickness d1, wherein an annular space has a substantially constant thickness R0-R1, wherein the annular space is filled with a stiffening compound, and wherein the stiffening compound bonds to and makes intimate contact with the interior surface of the exterior tube and the exterior surface of the interior tube. The cylindrical tube-in-tube design is perhaps the simplest design in that it uses the lowest amount of material for the largest possible volume, the circular shape also naturally resists the pressure from the outside, and the production of tubes as such is a well-known technology.

Producing the double-walled cylindrical tube segment is conceivable by separately producing the two tubes, e.g. by spiral-welding, followed by introducing the smaller diameter tube into the larger diameter tube. The space between the two tubes can be controlled by using suitable spacers. For instance balls could be introduced in the space of substantially the same size as the thickness of the space, acting as a kind of ball bearings, and the interior tube can be simply rolled into the exterior tube. After that the balls remain in place while the space is being provided with the stiffening compound. Preferably the balls are of a material that bonds to the stiffening compound, so as not to introduce weak spots in the stiffening compound.

In another embodiment the introducing the smaller diameter tube into the larger diameter tube with the aid of a profiled material that fits in the space between the two tubes. The profiled material has a height h that allows it to fit snugly in the space and guides the interior tube when being inserted in the exterior tube. The profiled material acts as a spacer, but also acts as a stiffener. It is therefore preferable that the profiled material is present everywhere in the space between the two tubes. The remaining space between the two tubes may be filled with the stiffening compound, such as a foam. The special profile may for example have a trapezoidal cross-section, pyramidal, or a sinusoidal cross section or the like. It may be perforated so as to improve the bond with the stiffening compound. If the stiffening compound is a foam that is formed in situ, then the perforations will ensure that the filling of the space is facilitated and the foam and the perforations may form a good bond. The profiled material may be applied in a staggered way if so desired. A slight overlapping of the profiles ensures that the profiled material is applied everywhere in the space between the two tubes. The advantage of the use of the profiled material as a spacer during introduction of the inner tube in the outer tube is that the relatively thin-walled tubes (thin-walled relative to their diameter of 3 to 5 meter) retain their shape and that the space between the two tubes is as equal as possible everywhere, which contributes to the structural integrity of the tube (resistance against buckling, stiffness, strength, etc.).

The spiral-welded tube can be produced from coiled steel strip. The strip may be hot-rolled, optionally galvanized and/or organically coated, or cold-rolled, annealed and optionally galvanized and/or organically coated.

These tube segments can be joined together to form a tube for an ETT. If required, clamping bands or a ring can be provided to line up two consecutive tube segments ready for welding the tube segments together.

In an embodiment the thickness of the metal plate of the interior and/or the exterior tube is at most 10 mm. In an embodiment the thickness of the metal plate of the interior and/or the exterior tube is at least 1 mm. In a preferable embodiment wherein the thickness of the metal plate of the exterior tube is between 1.5 and 5 mm. In a preferable embodiment wherein the thickness of the metal plate of the interior tube is between 1.5 and 5 mm.

In an embodiment the thickness of the annular space is between 25 and 75 mm. there appears to be an optimum in thickness of the stiffening compound. Preferably the thickness is between 30 and 60 mm.

In an embodiment the circular edges of the tube segment are bent into an inwardly or outwardly oriented flange for connecting the tube segment to an adjacent tube segment, preferably to the flange of the adjacent tube segment.

In an embodiment additional circumferential stiffeners are fixedly connected to the interior surface of the interior tube. The inwardly or outwardly oriented flange act as stiffeners and counteract the buckling tendency. Additional circumferential stiffeners may be used in the interior tube at set intervals to strengthen this effect. In an embodiment the stiffeners have a height of between 25 and 100 mm, wherein the thickness of the stiffeners is between 3 and 20 mm, and wherein the distance in the axial direction of the tube is between 500 and 2500 mm.

In a preferred embodiment the exterior metal plates and the interior metal plates of tube segments are produced from a hot-rolled steel strip, optionally galvanised and/or organic coated, wherein the rolling direction of the hot-rolled strip coincides with the tangential direction of the tube segment. To avoid loss of material, the amount of edge trimming of the hot-rolled strip is limited as much as possible. This embodiment allows producing short tube subsegments (STS), having a length approximately equal to the width of the hot-rolled strip. Flanges can be formed, e.g. roll formed, at the circular edges of the STS, inwardly or outwardly oriented, for connecting the STS to an adjacent tube segment, preferably to the flange of the adjacent tube segment. These flanges act as circumferential stiffeners and the distance between these stiffeners is therefore somewhat smaller than the width of the (optionally edge-trimmed) hot-rolled coil. With a coil width of e.g. 1600 mm, and a flange (=stiffener) height of about 70 mm, the length of the STS is about 1600 - 2 × 70 = 1460 mm. Short tube subsegments of this size are transportable by road transport. The stiffening compound can be introduced between the two short tubes in the same way as with the tube-in-tube segments described above.

It should of course be noted that if the width of a hot-rolled or cold-rolled strip is not sufficient to produce a short tube subsegments or long tube subsegment of the desired size that it is possible to produce wider hot-rolled or cold-rolled strip by welding two or more coils of strip together, thereby effectively doubling, tripling, etc, the width of the available plate. Most hot-strip mills and cold-strip mills are not able to provide strips wider than about 1.5 to 2 meters. If a tube segment consisting of long tube subsegments is to be produced and the preference is that no more than 4 long tube subsegments are to be used in constructing the tube segment then, for a 4 m diameter tube strip 4 long tube subsegments of 3.14 m width are needed. This will require welding together 2 strips of 1.57 m in width. Although the welding together is an additional process step in the production of a long tube subsegment, it may still be preferable over opting for 8 long tube subsegments of 1.57 m width to construct the tube segment. Moreover, the welding together can be highly automated and the technology is substantially the same as the technology employed in spiral welding of tube.

The tube segment can also be constructed from a number of double walled flat panels with the stiffening compound sandwiched in between (three panels in case of a triangular cross section, 4 in case of a rectangular cross section, etc.). Although the material needed for a tube segment increases, this may be outweighed by the simpler construction of the tube segment. However, large flat panel tube segments are more susceptible to buckling, so measures to prevent this must be taken, either by introducing additional stiffening elements, or by using thicker metal plates.

The invention is also embodied in a tube segment consisting of a plurality (n) of long tube-subsegments (also referred to as prefabricated wall parts) (4) wherein the long tube subsegments comprise an essentially quadrangular portion (5) having an outwardly facing surface (5') in the direction of the exterior of the tube segment and an inwardly facing surface (5") in the direction of the interior of the tube segment, said portion having two tangential edges (6, 7) and two axial edges (8, 9), wherein the long tube subsegments consists of an metal panel (10) and an inner metal panel (11), wherein the stiffening compound is sandwiched between the metal panels which bonds to and makes intimate contact with the metal panels (10,11), and wherein said n long tube subsegments are fixedly connected to each other along the tangential edges to form the tube segment (1).

The invention is also embodied in a tube segment consisting of a plurality (n) of long tube subsegments (4) wherein the long tube subsegments comprise a curved and essentially quadrangular portion (5) having an outwardly facing surface (5') in the direction of the exterior of the tube segment and an inwardly facing surface (5") in the direction of the interior of the tube segment, said portion having two tangential edges (6, 7) and two axial edges (8, 9), wherein the long tube subsegments consists of a curved outer metal panel (10) having a radius R0 and a curved inner metal panel (11) having a radius R1, wherein the stiffening compound is sandwiched between the metal panels which bonds to and makes intimate contact with the metal panels (10,11), said stiffening compound having a thickness of R0-R1, and wherein said n long tube subsegments are fixedly connected to each other along the tangential edges to form the tube segment (1).

The essentially quadrangular portion is curved thusly that the portion is a circle segment. This way the n segments that are needed to form a cylindrical tube each have a 360°/n circle segment as the curved portion.

Preferably the long tube-subsegments are provided with a male-female profile along the long edges 6,7 wherein the male profile of one long-tube segment mates with the female profile of the adjacent long tube-subsegments. The adjacent long tube-subsegments could be welded together along the long edges, or glued along the long edges, using the male-female connection if present, or by using clamping bands around the entire tube-segment, optionally with a sealing compound in the gap between the two long edges. An additional advantage of the male-female connection is the ease of lining op two adjacent edges. Once a complete tube segment is formed, then tube segments can be joined together to form a tube for an ETT. If required, clamping bands or a ring can be provided to line up two consecutive tube segments ready for welding the tube segments together.

The long tube-subsegments can be produced off-site in a dedicated production site. This allows careful control of the welding and preparation and introduction of the stiffening compound. Also, if present, the male female profile can be made along the edges, and if desired also along the short edges 8, 9 to provide an interlock between two adjacent tube segments.

In an embodiment the long tube-subsegments are connected by using inserts, optionally having the same length as the long tube-subsegments. These inserts may be solid bars, or tubes, or profiles. These inserts may be produced from steel, such as the Celsius^{®} range of square or rectangular hollow sections. The inserts are located between the long tube-subsegments and act as a stiffening element. In an embodiment the interior steel plate of the long tube-subsegments extends beyond the stiffening compound, so as to crease an opening for receiving the insert when touching the outer edge of the interior steel plate of the adjacent long tube-subsegment. The two adjacent long tube-subsegment can be welded together and simultaneously also welded to the insert, thereby fixing the insert in place. The weld penetrates into the long tube-subsegment (which thus doubles as a permanent backing-strip). The HAZ should be sufficiently narrow to avoid damage to the stiffening compound.

If the insert is a section or a square tube then the fixing of two adjacent adjacent long tube-subsegments may also be done mechanically instead of by welding. Sealant may be needed to ensure pressure tightness in that case. The exterior metal plates of the adjacent long tube-subsegment and the insert is covered by a strap surrounding the tube. This strap can be mechanically fastened by fasteners (e.g. self-tapping screws, or blind rivets), or welded or glued in place. If a suitable profile is used, then the profile may also serve as strap. When using honeycomb stiffening compounds, a threaded insert of a suitable sort may be used to connect adjacent long tube-subsegments together.

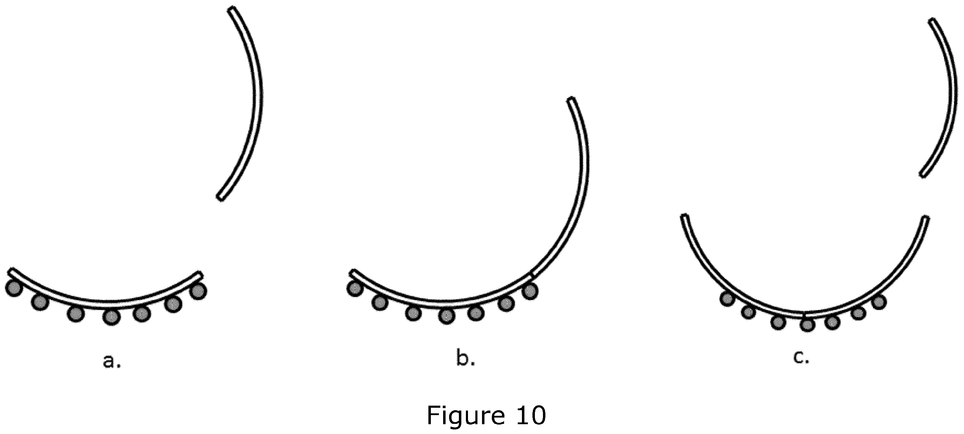

The construction of the tube segment from the long tube-subsegments can be performed on site of the construction of the ETT. The construction of the tube segment could be performed on a roller bed to support the first long tube-subsegment. The first long tube-subsegment is for instance lifted in by an assembly crane and lowered on to the roller beds. Next the second long tube-subsegments is lifted in and connected to the first segment along the long edge. The connected long tube-subsegments then rotate on the roller bed for lifting in the next long tube-subsegments until the tube segment is completed (see figure 10).

In an embodiment the prefabricated wall parts are glued together along the tangential edges. Developments in this area have made it possible to glue airplanes and cars together. The additional advantage of glue is that any gaps are immediately sealed for ingress of air into the vacuum tube, and moisture ingress so that corrosion by trapped moisture is prevented). The gluing may be combined with mechanical connections such as bolts.

In all cases a tube for evacuated tube transport system can be provided consisting of a plurality of tube segments according to any one of claims 1 to 15. By means of example, if the concept of the long tube-in-tube is used, and the length is about 30 m, then 33 tube segments are needed per km of track. If the tube segment is 1460 mm, then 685 tube segments are needed per km of track.

The material for the tubes is preferably steel strip. The strip may be hot-rolled, optionally galvanized and/or organically coated, or cold-rolled, annealed and optionally galvanized and/or organically coated.

The invention is further explained by means of the following non limiting examples.

As material for the exterior and interior metal tube an E420 hot-rolled HSLA with yield strength of 479 MPa, a tensile strength of 535 MPa, C=818 and n=0.145.

| | HDPU | Steel |
|---|---|---|
| Youngs Modulus E [GPa] | 0.2 | 210 |
| Poisson ratio *υ* [-] | 0.3 | 0.3 |
| Density *ρ* [kg/m³] | 260 | 7850 |

The tests were performed for a cylindrical tube segment of 4 m in diameter and a length of 30 m. A reference test was performed on a pure steel tube. The test revealed that a minimum thickness of 15 mm steel strip is required to prevent buckling of the tube if the interior is vacuum and the exterior is at atmospheric pressure. A safety factor of 2 result in a 20 mm thickness.

If the cylindrical tube is provided with circumferential stiffeners, formed by the (roll-)formed flanges of the short tube subsegments, or by introducing additional circumferential stiffeners, it depends on the distance (pitch) between the circumferential stiffeners, the height (H) of the stiffeners and the thickness of the stiffeners (twice the thickness of the strip) how thick the metal of the tube segment needs to be.

| H (mm) | Pitch | t (mm) |
|---|---|---|
| 50 | 600 | 7.50 |
| 70 | 1000 | 6.35 |
| 90 | 850 | 5.00 |

So by including 70 mm high stiffeners (=flanges) for STS's of 1000 mm the thickness can be reduced from 20 mm to 6.35 mm (safety factor 2). The weight would be reduced 20/6.35 from 59 to 19 tonnes for a tube segment of a length of 30 m.

The tube-in-tube concept was tested for 2 and 3 mm steel thickness for both the interior and exterior metal tube, and a thickness of the stiffening compound HDPU of 42 mm.

The weight of these tubes is 16.5 (12 tonnes of steel, 4.5 tonnes of HDPU) and 22.5 (18+4.5) tonnes respectively.

No buckling is observed in either case. A further reduction of steel thickness is possible by combining the stiffening effect of the flanges of the STS with the stiffening effect of the HDPU stiffening compound in between the two metal tubes.

Ansys (v18) was used for the analysis of the tests.

The invention is further explained by means of the following non-limitative drawings. The drawings are not to scale. The interior tube, through which the hyperloop is to run, is in the order of 3 to 5 m in diameter.

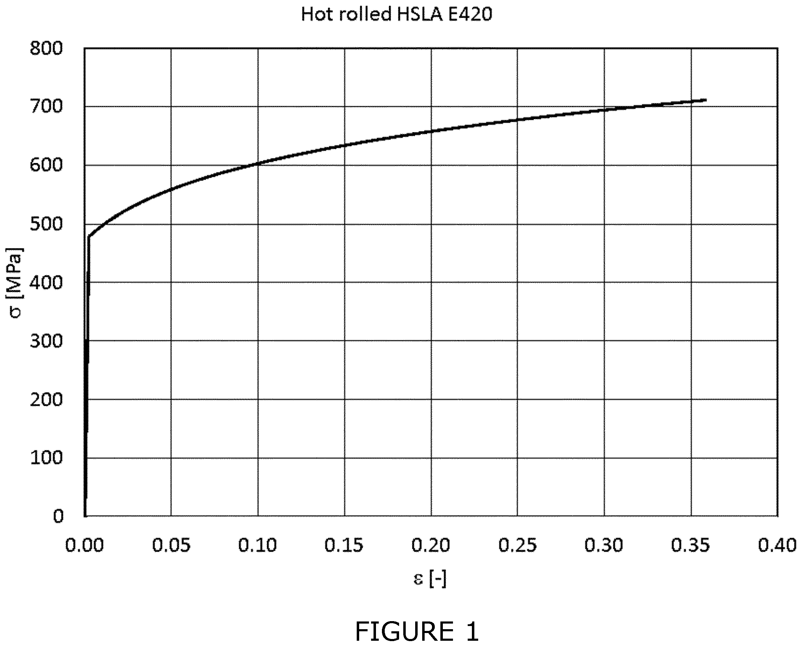

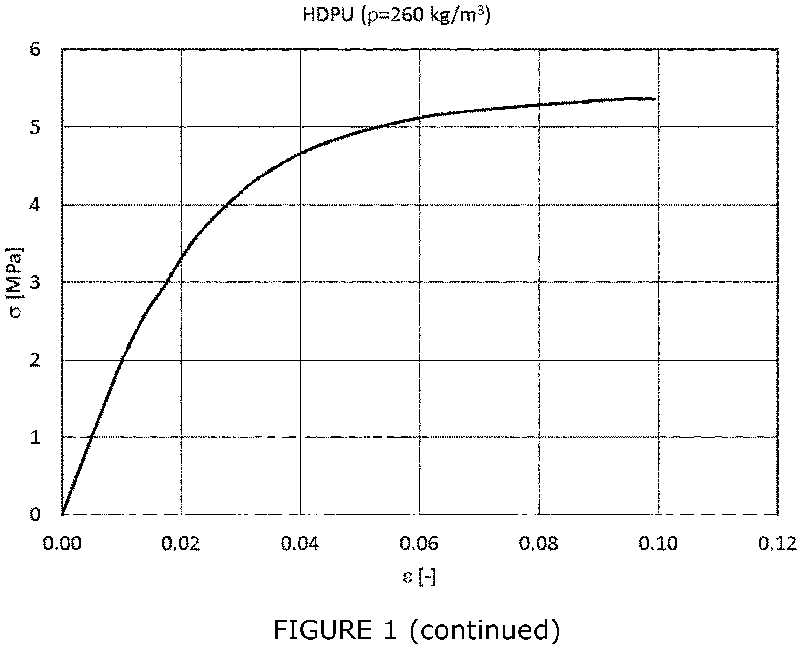

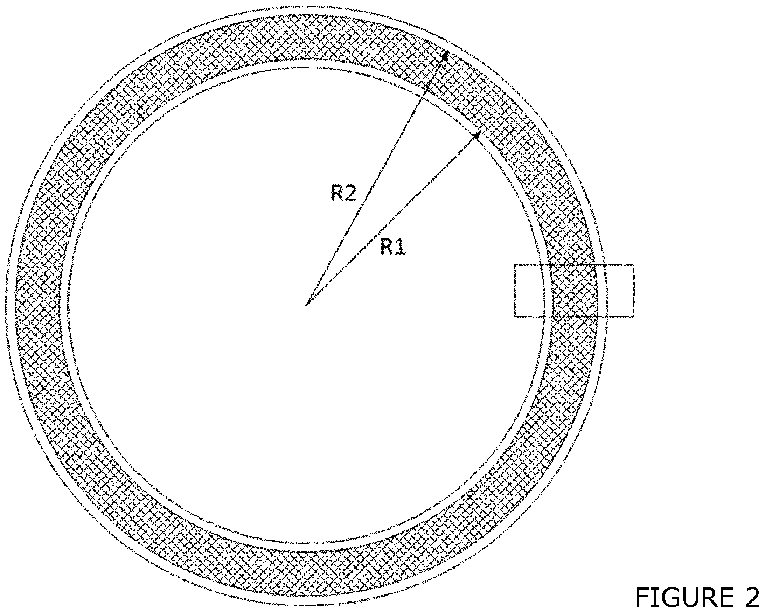

Figure 2 shows the important elements of the tube segment 1 in cross-section with the exterior metal tube 2 with an interior radius R0 and a wall thickness d0 (exterior radius R0+d0), and an interior metal tube 3 with an exterior radius R1, and a wall thickness d1, wherein an annular space A has a substantially constant thickness R0-R1, wherein the annular space is filled with a stiffening compound, and wherein the stiffening compound bonds to and makes intimate contact with the interior surface of the exterior tube and the exterior surface of the interior tube. The stiffening compound therefore ensures not only a stiffening of the tube-in-tube, but it is also a structural element in that it binds the interior tube and the exterior tube together.

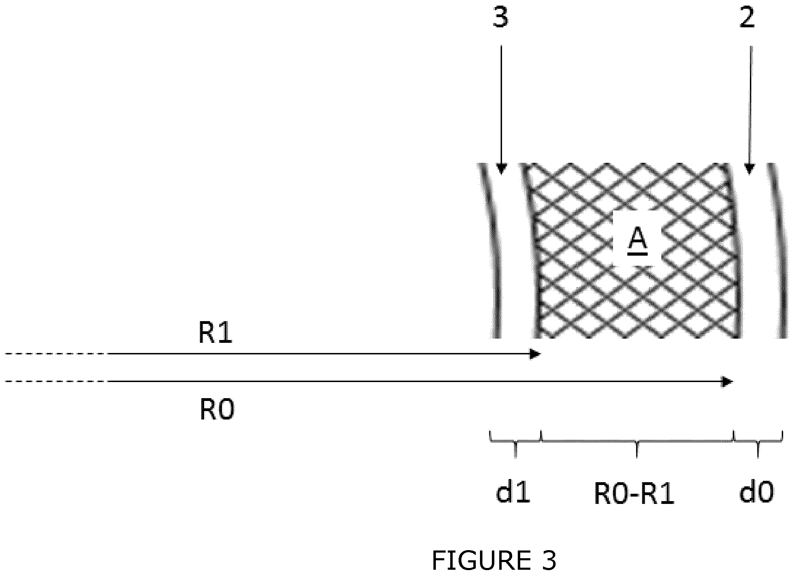

The rectangular cut-out in figure 2 is enlarged in figure 3. It shows the outer and inner metal tube 2 and 3 as well as the annular space A in between.

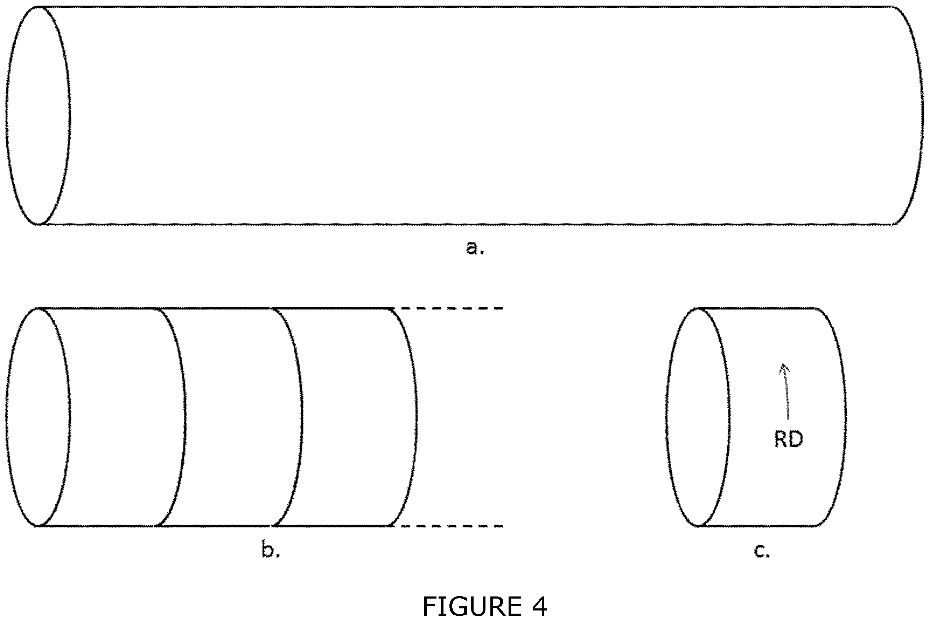

Figure 4a shows a tube segment of a certain length. Tube segments can consist of tube-in-tube of considerable length. A length of between 10 to 40 m could be contemplated, and production and transport of the lengths of tube-in-tube is the only limitation. The metal tubes can be spiral welded tubes, and this could be done on-site. However, the thickness of the metal strip is quite thin, and therefore it is important to maintain the roundness of the tube at the desired level, optionally by using spacers between the two tubes.

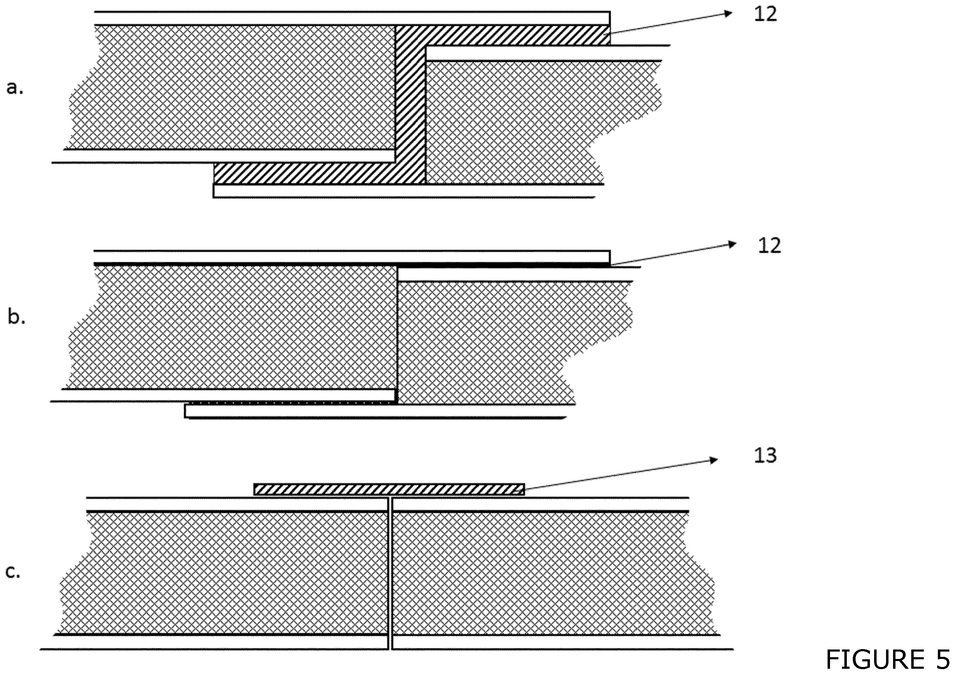

Figure 4b shows an alternative to the long tube-in-tube by producing rings of tube-in-tube of shorter length (STS). In one advantageous embodiment the rings can be made from hot-rolled, and optionally coated, (e.g. galvanised and/or organic coated), strip steel, wherein the width of the strip becomes the length of the tube segment. The rolling direction (RD) of the strip is therefore the tangential direction in the tube segment (see Figure 4c). Common hot strip mills are able to produce strips with a width between 500 and 2500 mm. The process of producing these types of short tube subsegments (STS) is more likely to be feasible on site than the 30 m long tube in tube on the basis of spiral welded strip due to handling and easier process control. An additional advantage is that a flange can be formed, e.g. by roll forming at either circular edge of the tube segment (see Figure 5). This flange can serve as an additional stiffening member against buckling, and it can be used to connect one tube segment to the next, e.g. by welding, gluing, bolting or the like. The flanges can be directed outwardly, or inwardly. This flange can also be provided at either circular edge of the tube segment if the tube segment is produced from (long) spiral-welded tubes. The effect of the flange as a stiffening element against buckling will be limited, because the distance between two subsequent stiffening elements is simply too large.

Figure 5a and 5b shows a schematic embodiment of two tube segments being glued together. The ends of two adjacent tube segments meet and are positioned as depicted with a suitable glue or adhesive 12 in between and pressed against each other. As one tube segment is inserted in the other. The flange on the outside of the tube segment may have to be slightly enlarged to act as a socket for the subsequent tube segment. An alternative would be to use a sleeve or strap (see Figure 5c) which tightly surrounds the two adjacent tubes and the sleeve can be welded in place or glued in place.

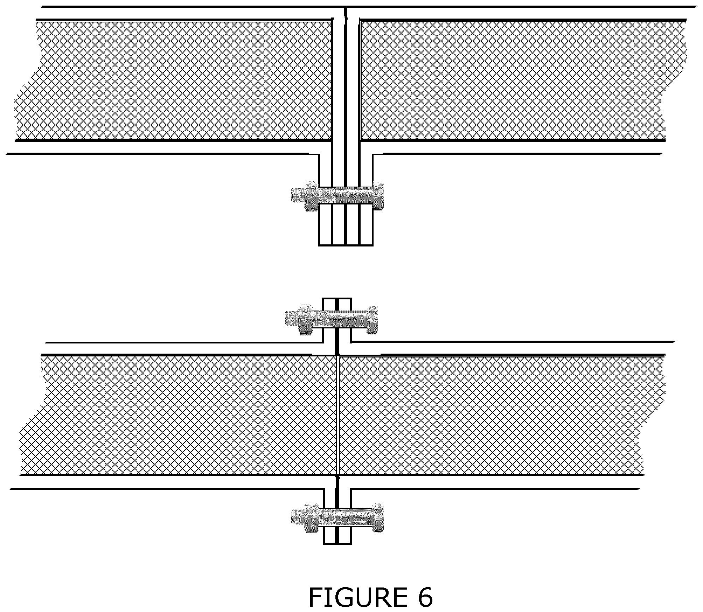

Figure 6 shows an example of the flanges being bent to one side and connected together using a bolt. The flanges could also be bent outwardly on one side and inwardly at the other side thereby producing flanges on the interior and the exterior.

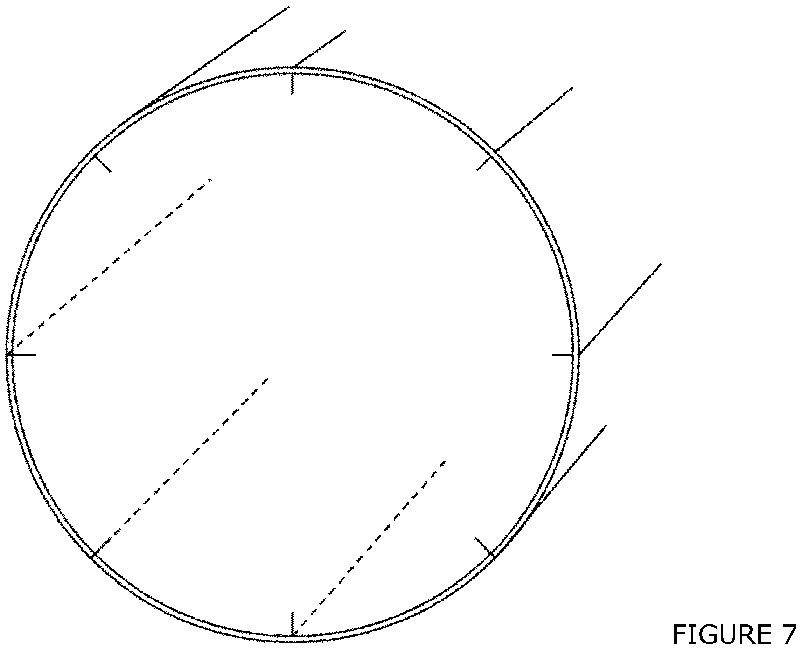

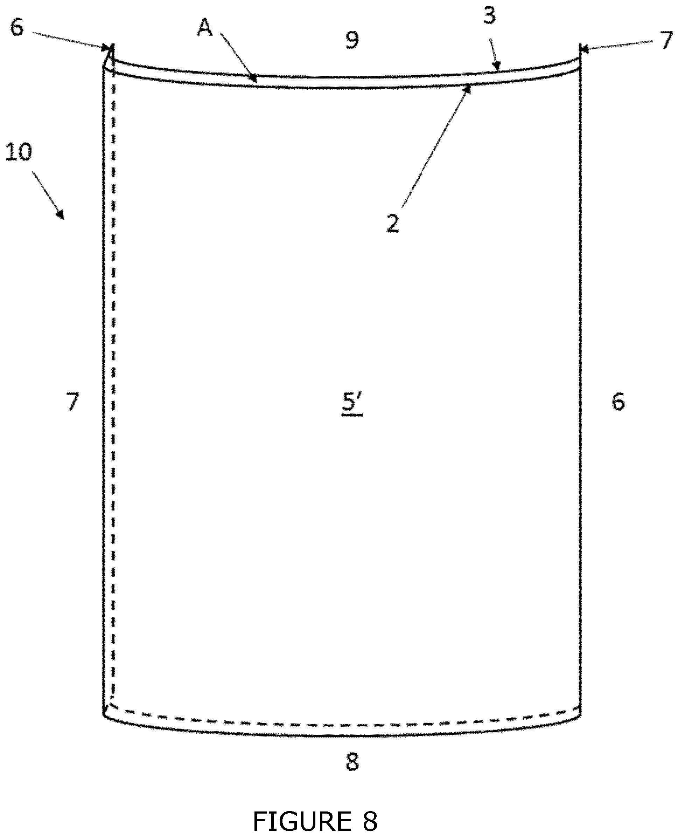

Figure 7 shows a frontal view of a tube-in-tube produced by connecting a plurality of long prefabricated wall parts (in this figure 8 prefabricated wall parts). These wall parts comprise a curved and essentially quadrangular portion 5 having an outwardly facing surface 5' in the direction of the exterior of the tube segment and an inwardly facing surface 5" in the direction of the interior of the tube segment, said portion having two tangential edges 6, 7 and two axial edges 8, 9, wherein the prefabricated wall parts consists of a curved outer metal panel 10 having an internal radius R0 and a curved inner metal panel 11 having an external radius R1, wherein the stiffening compound is sandwiched between the metal panels which bonds to and makes intimate contact with the metal panels 10,11, said stiffening compound having a thickness of R0-R1. A flange may be provided at one or more of the circular edges to connect the panel to an adjacent panel, or to an adjacent tube segment, but these are not depicted in Figure 7.

Figure 8 shows a long-tube subsegment (prefabricated wall part). The drawing is not to scale, but ideally the length of this wall part is the entire length of the tube segment, and the curved part 5 is 360°/n where n is the number of panels needed to produce a tube segment. If Hot- or cold rolled material is used for the prefabricated wall part, then the width is limited to the width of this material. For a 4 m diameter tube 12 1000 mm wide or 8 1600 mm wide panels are needed (width excluding the flanges). It depends on the height of the flanges how wide the strip needs to be. For 70 mm high flanges the (trimmed) strips become 1140 and 1740 mm wide respectively. The 8 panels, provided they all have the same dimensions, each have a circle segment of 360°/8=45°. The usual precautions against loss of vacuum or ingress (of water or the like) in the gap between subsequent segments should be taken. A rubber compound could be used to prevent water ingress. Also, a weld on the outside of the gap could be used as precaution against water ingress. This weld also adds to the structural integrity of the connected segments.

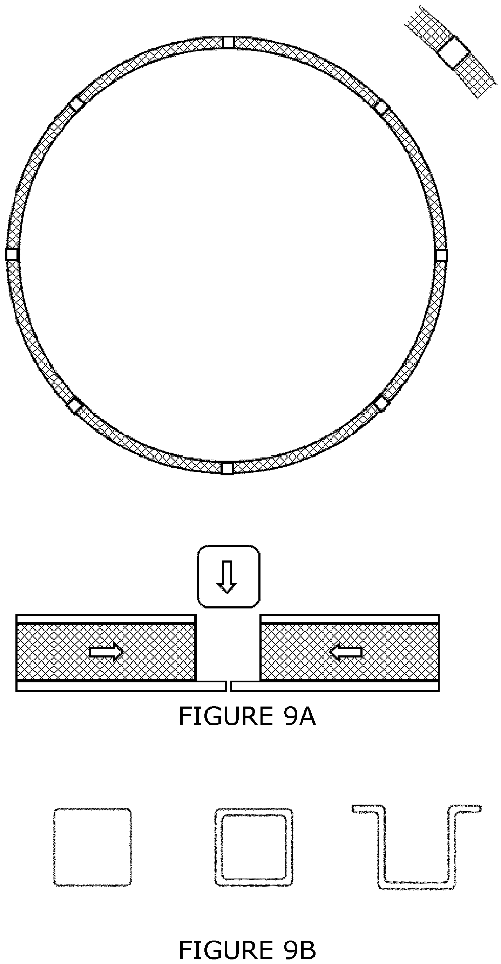

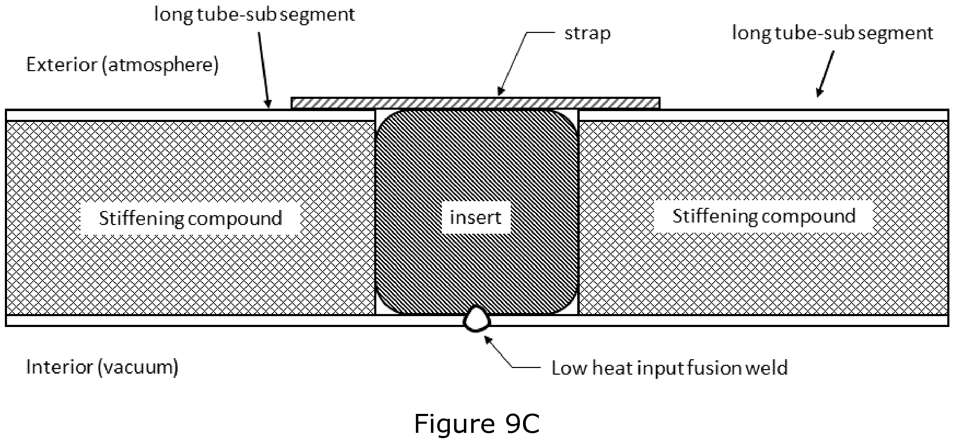

Figure 9A to 9D propose a different solution to connect the long tube subsegments. In the example depicted in 9A the two adjacent long tube subsegments are shown, wherein the metal plate on one side extend further than on the other side. If the ends touch, there remains a space between the stiffening compound of the one long tube subsegment and the other long tube subsegments. In this space an insert can be placed. Without wanting to be limited to these, figure 9B shows some examples of the possibilities of this embodiment: a solid bar, a square or rectangular hollow tube, or a special profile. Figure 9C shows the solid bar as insert. The touching ends of the extending metal plate can be welded together and simultaneously weld the plates to the solid bar. In this example the insert is a solid metal bar. The HAZ should be sufficiently narrow to avoid damage to the stiffening compound. On the other side (the exterior of the tube in this example) a strap can be fixed in place, either by welding, gluing or the like, thereby sealing the gap and preventing ingress of moisture. Additional use of sealant may be useful. If the solid bar is a structural polymer, then welding the insert in place may not be an option and mechanical fixing or gluing may be applied.

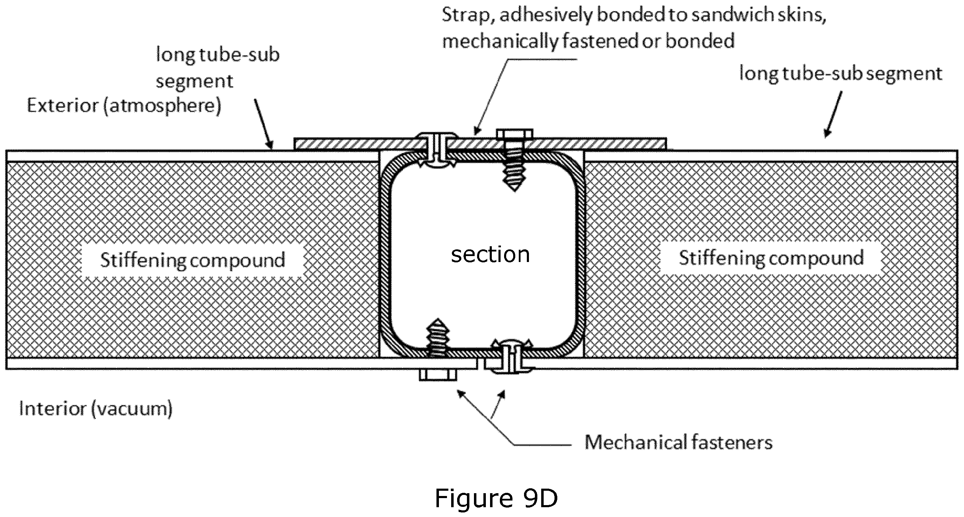

In Figure 9D an alternative is proposed for the insert: a hollow profile or hollow section. This results in a weight saving over a solid metal bar. Examples of these sections are the Celsius^{®} 355 or Celsius^{®} 420 structural hollow sections which are available in many dimensions, for example in 40 × 40 mm (in steps of 10 mm) with a wall thickness of 3 mm. Such a hollow section weighs 3.41 kg/m for a 40×40 and 5.29 kg/m for a 60×60 profile. The insert can be welded in place like the solid bar, or it can be fixed using mechanical fasteners like self-tapping screws or blind rivets. Additional use of sealant may be useful to make the connections air-tight.

The profile as depicted in Figure 9B (right) combines the benefits of the hollow profile (additional stiffening) and weldability to the ends of the extending metal plates of the long tube subsegments as with the solid bar, and the flanges of the special profile double as the strap to be fixed on the other metal plate of the long tube subsegments.

It is noted that the Figures 9C and 9D are depicted with the interior and exterior of the tube as indicated. This appears to be the most convenient approach from a handling perspective because the inserts can be lifted in place easily, and the strap can also be applied easily, whereas the welding or mechanical fixing can be done inside the tube . However, it should be noted also that the principle can also be used the other way around wherein the insert is placed in the tube and lifted in position and fixed from the outside.

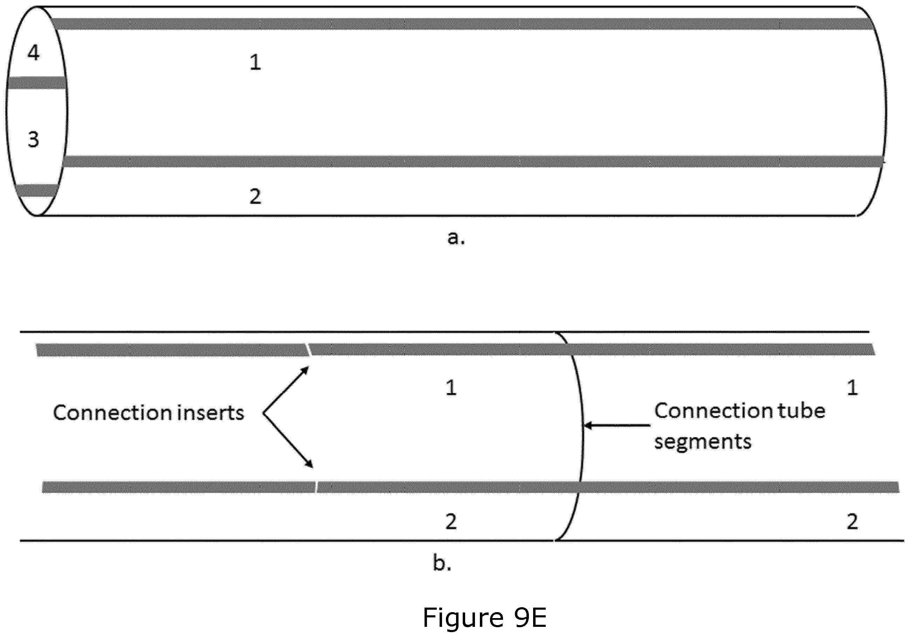

The insert can have the same length as the tube segment. However, as the insert is not an integral part of the long tube subsegment, it can also be used in a staggered fashion and form a connection between two consecutive tube segments. This is schematically depicted in figure 9E. The same effect can be reached if one tube segment is provided with inserts that are longer than the tube segment, and the next is provided with complementary shorter inserts which can then be connected to the longer insert of the previous tube segment thereby providing a skeleton frame wherein the connections between the inserts do not coincide with the connections between the tube segments.

Figure 10 shows a schematic process of producing tube segments from long tube subsegments. In figure 10 a first long tube subsegment is placed on a roller bed. A second long tube subsegment is lifted in, and fixed to the first long tube subsegment. After fixing the two connected long tube subsegment the connected long tube subsegments rotate on the roller bed (see Figure 10B). Another long tube subsegment is lifted in, and fixed to the already connected long tube subsegments and this continues until the tube segment is complete. It depends on the width of the long tube subsegments how many of these need to be connected together to arrive at the completed tube segment. The long tube subsegments can be transported on a train, lorry, ship, through the already built tube or by air transport (helicopter) and because they are flatter than the completed tube segment, they are less hampered by viaducts etc when transported over the road.

Although it is deemed preferably from a production and logistics point of view that individual tube segments as depicted in Figure 4a for a round tube are produced which are subsequently connected to form a tube, it is also conceivable that long tube subsegments are used in a staggered fashion (like brick-work) in which case each subsequent long tube subsegments is connected to the part of the tube that is already in place.

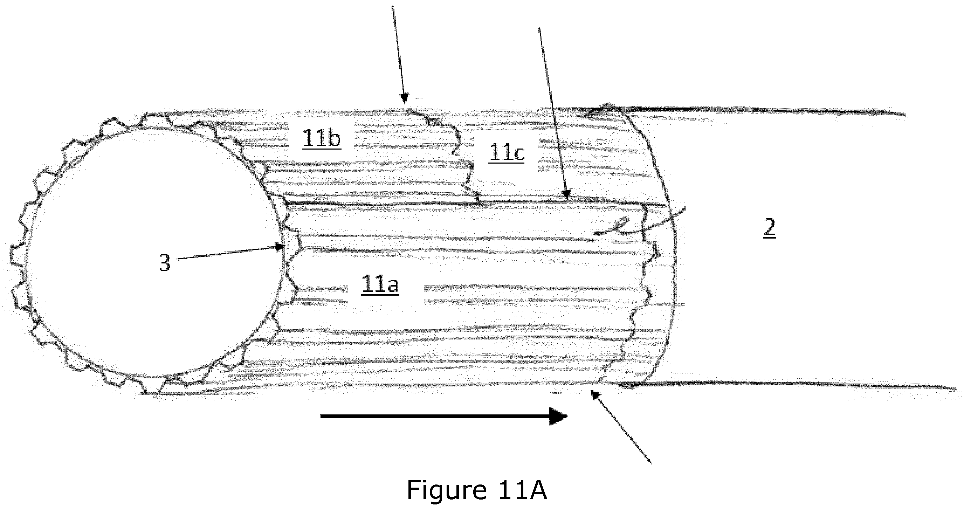

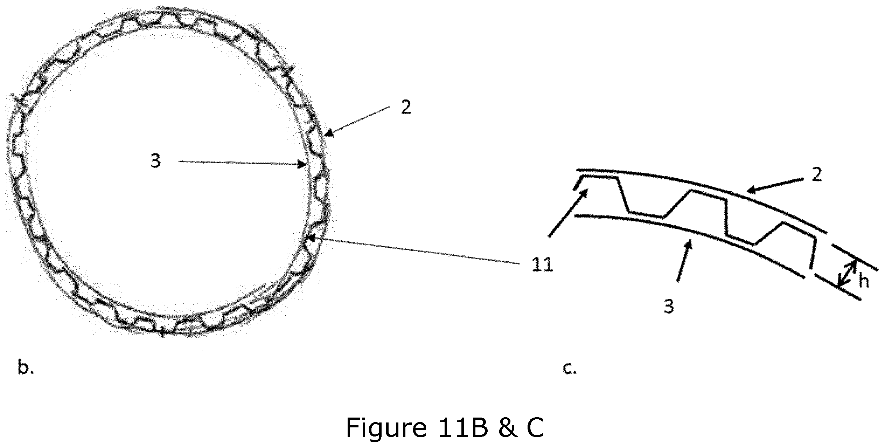

Figure 11 shows an embodiment of the tube-in-tube concept with the use of a profiled material as a spacer. Figure 11a shows the inner tube 3 being inserted in the outer tube 2 with the aid of profiled material 11 as a spacer. In figure a three pieces of profiled material are shown (11a, 11b and 11c). These pieces are used in a staggered fashion and overlap so that the profiled material is present everywhere in the space between tubes 2 and 3. Figure 11b shows the cross section with the profiled material, in this case a trapezoidal version between tube 2 and 3. The remaining space between the tubes may be filled with stiffening compound. Figure 11c shows a detail of the cross section. The profile acts as a spacer so the height h must be sufficiently high to act as an efficient spacer, but the height must not exceed a level that inserting the inner tube and the profiled material into the outer tube is prevented.

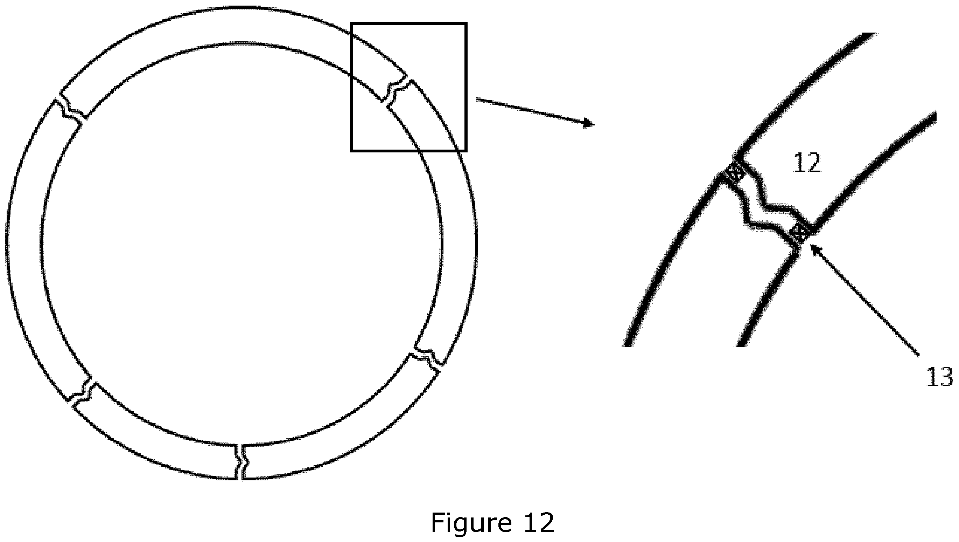

Figure 12 shows a schematic cross section of a tube segment comprising 5 long tube subsegments. The cut-out on the right shows the edges of the segments with the male-female connection 12 schematically drawn. In this example the connection is not a fixed connection but more an aid for lining out the segments. However, a fixed connection could also be used so as to snap the segments together until more permanent connections are in place. Between the two segments sealants 13 are drawn. This may also be a glue like compound. The segments shown in Figure 12 are closed at the edges 6,7 and no flanges are present in this example. The enclosed space in the segments are filled with the stiffening compound, which may be a urethane foam or the like.

## Claims

1. An evacuated tube transport system tube which, in use, is evacuated, having an internal diameter of at least 3 m, comprising a plurality of tube segments (1) wherein the tube segments consist of a double-walled metal tube comprising an exterior metal tube (2) having a wall thickness d0, and an interior metal tube (3) having a wall thickness d1, wherein the space between the exterior metal tube and the interior metal is filled with a stiffening compound, and wherein the stiffening compound bonds to and makes intimate contact with the interior surface of the exterior tube (2) and with the exterior surface of the interior tube (3).

2. The evacuated tube transport system tube according to claim 1 having an internal diameter of at most 5 m.

3. The evacuated tube transport system tube according to claim 1 in which, in use, the internal pressure is near vacuum, preferably at most 100 Pa.

4. The evacuated tube transport system tube according to any one of the preceding claims wherein the tube segments consists of a double-walled metal tube comprising an exterior metal tube (2) with an interior radius R0 and a wall thickness d0, and an interior metal tube (3) with an exterior radius R1, and a wall thickness d1, wherein the space between the exterior metal tube and the interior metal tube is a substantially annular space (A), said space preferably having a substantially constant thickness R0-R1, wherein the annular space is filled with the stiffening compound that bonds to and makes intimate contact with the interior surface of the exterior tube (2) and with the exterior surface of the interior tube (3).

5. The evacuated tube transport system tube according to any one of the preceding claims, wherein the stiffening compound is a honeycomb material, preferably a rigid polymer honeycomb material.

6. The evacuated tube transport system tube according to any one of the preceding claims, wherein the stiffening compound is a structural foam, preferably a high density structural foam.

7. The evacuated tube transport system tube according to any one of the preceding claims, wherein the stiffening compound is a high density polyurethane foam.

8. The evacuated tube transport system tube according to any one of the preceding claims, wherein the stiffening compound is formed in situ in the annular space, preferably wherein the stiffening compound is an ambient cured foam or a heat cured foam.

9. The evacuated tube transport system tube according to any one of the preceding claims, wherein the thickness of the metal of the exterior tube and/or the interior tube is between 1.5 and 5 mm.

10. The evacuated tube transport system tube according to any one of the preceding claims, wherein the thickness of the annular space is between 25 and 75 mm.

11. The evacuated tube transport system tube according to any one of the preceding claims, wherein the edges of the segment are bent into an inwardly or outwardly oriented flange for connecting the tube segment to another tube segment.

12. The evacuated tube transport system tube according to any one of the preceding claims, wherein additional circumferential stiffeners are fixedly connected to the interior surface of the interior tube.

13. The evacuated tube transport system tube according to any one of the preceding claims, wherein the stiffeners have a height of between 25 and 100 mm, wherein the thickness of the stiffeners is between 3 and 10 mm, and wherein the distance in the axial direction of the tube is between 500 and 2500 mm.

14. The evacuated tube transport system tube according to any one of the preceding claims, wherein the exterior metal plate and the interior metal plate are produced from a hot-rolled steel strip, optionally galvanised, and wherein the rolling direction of the hot rolled strip coincides with the tangential direction of the tube segment.

15. The evacuated tube transport system tube according to any one of the preceding claims, wherein the segment consists of a plurality (n) of prefabricated wall parts (4) wherein the parts comprise an essentially quadrangular portion (5) having an outwardly facing surface (5') in the direction of the exterior of the tube segment and an inwardly facing surface (5") in the direction of the interior of the tube segment, said portion having two tangential edges (6, 7) and two axial edges (8, 9), wherein the prefabricated wall parts consists of an outer metal panel (10) and an inner metal panel (11), wherein the stiffening compound is sandwiched between the metal panels which bonds to and makes intimate contact with the metal panels (10,11), and wherein said n prefabricated wall parts are fixedly connected to each other along the tangential edges to form the tube segment (1).

## Patentansprüche

1. Vakuumröhren-Transportsystemröhre, die im Gebrauch evakuiert wird, mit einem Innendurchmesser von mindestens 3 m, umfassend eine Vielzahl von Röhrensegmenten (1), wobei die Röhrensegmente aus einer doppelwandigen Metallröhre, die eine äußere Metallröhre (2) mit einer Wanddicke d0 umfasst, und einer inneren Metallröhre (3) mit einer Wanddicke d1 bestehen, wobei der Raum zwischen der äußeren Metallröhre und dem inneren Metall mit einer Versteifungsverbindung gefüllt ist und wobei die Versteifungsverbindung an der Innenfläche der äußeren Röhre (2) und der Außenfläche der inneren Röhre (3) haftet und einen engen Kontakt mit diesen herstellt.

2. Vakuumröhren-Transportsystemröhre nach Anspruch 1 mit einem Innendurchmesser von höchstens 5 m.

3. Vakuumröhren-Transportsystemröhre nach Anspruch 1, bei der der Innendruck im Gebrauch nahe Vakuum liegt, vorzugsweise bei höchstens 100 Pa.

4. Vakuumröhren-Transportsystemröhre nach einem der vorhergehenden Ansprüche, wobei die Röhrensegmente aus einer doppelwandigen Metallröhre, die eine äußere Metallröhre (2) mit einem Innenradius R0 und einer Wanddicke d0 umfasst, und einer inneren Metallröhre (3) mit einem Außenradius R1 und einer Wanddicke d1 bestehen, wobei der Raum zwischen der äußeren Metallröhre und der inneren Metallröhre ein im Wesentlichen ringförmiger Raum (A) ist, wobei der Raum vorzugsweise eine im Wesentlichen konstante Dicke R0-R1 aufweist, wobei der ringförmige Raum mit der Versteifungsverbindung gefüllt ist, die an der Innenfläche der äußeren Röhre (2) und der Außenfläche des inneren Röhre (3) haftet und einen engen Kontakt mit diesen herstellt.

5. Vakuumröhren-Transportsystemröhre nach einem der vorhergehenden Ansprüche, wobei die Versteifungsverbindung ein Wabenmaterial, vorzugsweise ein starres Polymerwabenmaterial ist.

6. Vakuumröhren-Transportsystemröhre nach einem der vorhergehenden Ansprüche, wobei die Versteifungsverbindung ein Strukturschaum, vorzugsweise ein Strukturschaum hoher Dichte ist.

7. Vakuumröhren-Transportsystemröhre nach einem der vorhergehenden Ansprüche, wobei die Versteifungsverbindung ein Polyurethanschaum hoher Dichte ist.

8. Vakuumröhren-Transportsystemröhre nach einem der vorhergehenden Ansprüche, wobei die Versteifungsverbindung vor Ort in dem ringförmigen Raum gebildet wird, vorzugsweise wobei die Versteifungsverbindung ein unter Umgebungsbedingungen ausgehärteter Schaum oder ein wärmeausgehärteter Schaum ist.

9. Vakuumröhren-Transportsystemröhre nach einem der vorhergehenden Ansprüche, wobei die Dicke des Metalls der äußeren Röhre und/oder der inneren Röhre zwischen 1,5 und 5 mm beträgt.

10. Vakuumröhren-Transportsystemröhre nach einem der vorhergehenden Ansprüche, wobei die Dicke des ringförmigen Raums zwischen 25 und 75 mm beträgt.

11. Vakuumröhren-Transportsystemröhre nach einem der vorhergehenden Ansprüche, wobei die Kanten des Segments zu einem nach innen oder außen gerichteten Flansch gebogen sind, um das Röhrensegment mit einem anderen Röhrensegment zu verbinden.

12. Vakuumröhren-Transportsystemröhre nach einem der vorhergehenden Ansprüche, wobei zusätzliche Umfangsversteifungen fest mit der Innenfläche der inneren Röhre verbunden sind.

13. Vakuumröhren-Transportsystemröhre nach einem der vorhergehenden Ansprüche, wobei die Versteifungen eine Höhe zwischen 25 und 100 mm aufweisen, wobei die Dicke der Versteifungen zwischen 3 und 10 mm beträgt und wobei der Abstand in axialer Richtung der Röhre zwischen 500 und 2500 mm beträgt.

14. Vakuumröhren-Transportsystemröhre nach einem der vorhergehenden Ansprüche, wobei die äußere Metallplatte und die innere Metallplatte aus einem warmgewalzten Stahlband, optional verzinkt, hergestellt sind und wobei die Walzrichtung des warmgewalzten Bandes mit der Tangentialrichtung des Röhrensegments übereinstimmt.

15. Vakuumröhren-Transportsystemröhre nach einem der vorhergehenden Ansprüche, wobei das Segment aus einer Vielzahl (n) von vorgefertigten Wandteilen (4) besteht, wobei die Teile einen im Wesentlichen viereckigen Abschnitt (5) mit einer nach außen weisenden Oberfläche (5') in Richtung des Äußeren des Röhrensegments und einer nach innen weisenden Fläche (5") in Richtung des Inneren des Röhrensegments umfassen, wobei der Abschnitt zwei tangentiale Kanten (6, 7) und zwei axiale Kanten (8, 9) aufweist, wobei die vorgefertigten Wandteile aus einer äußeren Metallplatte (10) und einer inneren Metallplatte (11) bestehen, wobei die Versteifungsverbindung sandwichartig zwischen den Metallplatten angeordnet ist, die an den Metallplatten (10,11) haftet und einen engen Kontakt mit diesen herstellt, und wobei die n vorgefertigten Wandteile entlang der tangentialen Kanten fest miteinander verbunden sind, um das Röhrensegment (1) zu bilden.

## Revendications

1. Tube de système de transport par tube sous vide qui, en cours d'utilisation, est sous vide, ayant un diamètre interne d'au moins 3 m, comprenant une pluralité de segments de tube (1) dans lequel les segments de tube sont constitués d'un tube métallique à double paroi comprenant un tube métallique extérieur (2) ayant une épaisseur de paroi d0, et un tube métallique intérieur (3) ayant une épaisseur de paroi d1, dans lequel l'espace entre le tube métallique extérieur et le métal intérieur est rempli d'un composé raidisseur, et dans lequel le composé raidisseur se lie à et établit un contact intime avec la surface intérieure du tube extérieur (2) et avec la surface extérieure du tube intérieur (3).

2. Tube de système de transport par tube sous vide selon la revendication 1, ayant un diamètre interne d'au plus 5 m.

3. Tube de système de transport par tube sous vide selon la revendication 1, dans lequel, en cours d'utilisation, la pression interne est proche du vide, de préférence d'au plus 100 Pa.

4. Tube de système de transport par tube sous vide selon l'une quelconque des revendications précédentes, dans lequel les segments de tube sont constitués d'un tube métallique à double paroi comprenant un tube métallique extérieur (2) avec un rayon intérieur R0 et une épaisseur de paroi d0, et un tube métallique intérieur (3) avec un rayon extérieur R1 et une épaisseur de paroi d1, dans lequel l'espace entre le tube métallique extérieur et le tube métallique intérieur est un espace sensiblement annulaire (A), ledit espace ayant de préférence une épaisseur sensiblement constante R0-R1, dans lequel l'espace annulaire est rempli du composé raidisseur qui se lie à et établit un contact intime avec la surface intérieure du tube extérieur (2) et avec la surface extérieure du tube intérieur (3).

5. Tube de système de transport par tube sous vide selon l'une quelconque des revendications précédentes, dans lequel le composé raidisseur est un matériau en nid d'abeilles, de préférence un matériau en nid d'abeilles polymère rigide.

6. Tube de système de transport par tube sous vide selon l'une quelconque des revendications précédentes, dans lequel le composé raidisseur est une mousse structurelle, de préférence une mousse structurelle à haute densité.

7. Tube de système de transport par tube sous vide selon l'une quelconque des revendications précédentes, dans lequel le composé raidisseur est une mousse polyuréthane haute densité.

8. Tube de système de transport par tube sous vide selon l'une quelconque des revendications précédentes, dans lequel le composé raidisseur est formé in situ dans l'espace annulaire, de préférence dans lequel le composé raidisseur est une mousse durcie à température ambiante ou une mousse durcie à chaud.

9. Tube de système de transport par tube sous vide selon l'une quelconque des revendications précédentes, dans lequel l'épaisseur du métal du tube extérieur et/ou du tube intérieur est comprise entre 1,5 et 5 mm.

10. Tube de système de transport par tube sous vide selon l'une quelconque des revendications précédentes, dans lequel l'épaisseur de l'espace annulaire est comprise entre 25 et 75 mm.

11. Tube de système de transport par tube sous vide selon l'une quelconque des revendications précédentes, dans lequel les bords du segment sont pliés en une bride orientée vers l'intérieur ou l'extérieur pour connecter le segment de tube à un autre segment de tube.

12. Tube de système de transport par tube sous vide selon l'une quelconque des revendications précédentes, dans lequel des raidisseurs circonférentiels supplémentaires sont connectés de manière fixe à la surface intérieure du tube intérieur.

13. Tube de système de transport par tube sous vide selon l'une quelconque des revendications précédentes, dans lequel les raidisseurs ont une hauteur comprise entre 25 et 100 mm, dans lequel l'épaisseur des raidisseurs est comprise entre 3 et 10 mm, et dans lequel la distance dans la direction axiale du tube est comprise entre 500 et 2500 mm.

14. Tube de système de transport par tube sous vide selon l'une quelconque des revendications précédentes, dans lequel la plaque métallique extérieure et la plaque métallique intérieure sont produites à partir d'une bande d'acier laminée à chaud, éventuellement galvanisée, et dans lequel la direction de laminage de la bande laminée à chaud coïncide avec la direction tangentielle du segment de tube.

15. Tube de système de transport par tube sous vide selon l'une quelconque des revendications précédentes, dans lequel le segment est constitué d'une pluralité (n) de pièces de paroi préfabriquées (4) dans lequel les pièces comprennent une partie essentiellement quadrangulaire (5) ayant une surface tournée vers l'extérieur (5') en direction de l'extérieur du segment de tube et une surface tournée vers l'intérieur (5") en direction de l'intérieur du segment de tube, ladite partie ayant deux bords tangentiels (6, 7) et deux bords axiaux (8, 9), dans lequel les pièces de paroi préfabriquées sont constituées d'un panneau métallique extérieur (10) et d'un panneau métallique intérieur (11), dans lequel le composé raidisseur est pris en sandwich entre les panneaux métalliques, ce qui lie à et établit un contact intime avec les panneaux métalliques (10, 11), et dans lequel lesdites n pièces de paroi préfabriquées sont connectées de manière fixe les unes aux autres le long des bords tangentiels pour former le segment de tube (1).
